# FASCICULE DE BREVET EUROPEEN

(11) **EP 2 490 965 B1**
(45) Date de publication et mention de la délivrance du brevet: **07.08.2013**
(21) Numéro de dépôt: 10765801.5
(22) Date de dépôt: 18.10.2010
(51) Int. Cl.: B65G 47/08

(54) **DISPOSITIF DE FORMATION DE LOTS DE PRODUITS POUR LEUR CHARGEMENT DANS DES RECEPTACLES**
VORRICHTUNG ZUR HERSTELLUNG VON PRODUKTCHARGEN ZU IHRER ABFÜLLUNG IN BEHÄLTNISSE
DEVICE FOR FORMING PRODUCT BATCHES IN ORDER TO LOAD SAME IN RECEPTACLES

(30) Priorité: 19.10.2009 FR 0905011
(43) Date de publication de la demande: 29.08.2012
(73) Titulaire: Marel France, 56150 Baud (FR)
(72) Inventeur: LE PAIH, Jacques, F-56930 Plumeliau (FR); LE GOFF, Laurent, F-56000 Vannes (FR); LE PABIC, Fabrice, F-56330 Camors (FR)
(74) Mandataire: Hays, Bertrand
(86) Numéro de dépôt international: PCT/EP2010/065657
(87) Numéro de publication internationale: WO 2011/048059

(56) Documents cités:
- EP-A1- 0 266 489
- EP-A1- 0 551 613
- DE-A1- 3 238 888
- US-A- 5 460 258

## Description

La présente invention concerne un dispositif pour la formation de lots de produits en vue de leur chargement dans des réceptacles, en particulier pour la formation de lots de produits alimentaires, notamment de saucisses, destinés à être chargés dans des barquettes.

Il est connu des dispositifs de formation de lots de produits comprenant un premier convoyeur à logements comportant deux liens sans fin guidés sur des organes de renvoi à axes de rotation horizontaux, selon un trajet de circulation, et portant une pluralité de palettes définissant entre elles des logements pouvant chacun être chargé avec au moins un produit à un poste de chargement du trajet de circulation, et être déchargé à un poste de déchargement du trajet de circulation, et un second convoyeur à bande sans fin apte à transporter des produits les uns derrière les autres, et à amener un ou plusieurs produits dans chaque logement du convoyeur à logements au poste de chargement. Ces dispositifs comprennent en outre des moyens de déchargement aptes à décharger simultanément un lot de produits de logements successifs du convoyeur à logements au poste de déchargement, en vue de leur chargement dans un réceptacle. Dans ces dispositifs, le second convoyeur à bande sans fin est disposé parallèlement au convoyeur à logements, et transfère les produits par le côté extérieur ouvert des logements définis entre les bords transversaux extérieurs des palettes.

Ces dispositifs sont classiquement utilisés pour des produits plats et/ou peu fragiles et/ou présentant une certaine rigidité, par exemple de type journaux ou revues. Ces dispositifs s'avèrent toutefois inadaptés pour certains types de produits. En outre, ces dispositifs ne permettent pas un positionnement transversal précis des produits dans les logements.

Le document US 5 460 258 A1 décrit un dispositif selon le préambule de la revendication 1. Les articles y sont chargés latéralement dans les logements et une butée permet de les positionner précisément dans les logements. Sur un convoyeur de sortie, des taquets permettent d'évacuer simultanément plusieurs produits de plusieurs logements. Cependant, le nombre d'articles qu'il est possible de grouper est limité par la taille des taquets du convoyeur de sortie.

Le but de la présente invention est de proposer une solution visant à pallier les inconvénients précités.

A cet effet, la présente invention propose un dispositif de formation de lots de produits tel que décrit dans la revendication 1, lesdits lots étant destinés à être chargés dans des réceptacles, en particulier de lots de produits alimentaires, notamment de saucisses, en vue de leur chargement dans des barquettes.

Les moyens de butée sont par exemple aptes à venir sensiblement fermer chaque logement du côté latéral du logement opposé au convoyeur d'amenée lors du chargement d'un ou plusieurs produit dans ledit logement.

Selon l'invention, le chargement du convoyeur à logements est réalisé latéralement par côté latéral du logement, ce qui permet le chargement de différents types de produit, notamment de produits allongés, en particulier non rigides, tels que des produits alimentaires tels que des saucisses, dans une position transversale précise dans les logements.

Selon une particularité, ledit convoyeur d'amenée comprend une portion d'extrémité aval de brin s'étendant entre les deux liens du convoyeur principal, de sorte que chaque produit soit entraîné positivement dans un logement, jusqu'à sa mise en butée contre les moyens de butée. Une telle portion d'extrémité aval garantit un positionnement correct du produit dans le logement, avec une position transversale précise dans le logement, notamment dans le cas de produits souples et fragiles, tels que des saucisses, permettant de former des lots de produits parfaitement alignés, rentrant facilement dans des réceptacles, sans être endommagés.

Selon un mode de réalisation, le poste de remplissage est défini au niveau d'un organe de renvoi, les palettes étant fixées rigidement aux liens de sorte que les deux palettes successives d'un logement s'écartent l'une de l'autre lors du passage des liens sur ledit organe de renvoi, afin d'ouvrir le logement et ainsi faciliter l'insertion d'un ou plusieurs produits, et se rapprochent en sortie de l'organe de renvoi.

Selon un mode de réalisation, les palettes d'un logement sont aptes à pincer le(s) produit(s) chargés dans le logement après passage des liens sur les organes de renvoi. Dans le cas de saucisses, les saucisses peuvent alors être extraites des logements pour être placées directement bord à bord dans des barquettes, sans nécessiter d'étape intermédiaire de retassage.

Selon un mode de réalisation, le convoyeur à logements comprend les liens guidés selon un trajet de circulation en triangle par deux organes de renvoi principaux et un organe de renvoi intermédiaire, le poste de chargement étant défini au niveau dudit organe de renvoi intermédiaire, le convoyeur d'amenée étant apte à amener les produits dans les logements lors de leur passage sur ledit organe de renvoi intermédiaire. Cette disposition permet de ménager un espace pour le positionnement de ladite portion d'extrémité aval, et de maintenir un poste de chargement fixe lorsque les deux organes de renvoi sont déplacés en va-et-vient pour effectuer un déchargement à l'arrêt, tel que décrit ci-après.

Selon un mode de réalisation, ledit organe de renvoi intermédiaire est disposé au-dessus des organes de renvoi principaux, ledit organe de renvoi intermédiaire comprenant pour chaque lien, une roue intermédiaire, le convoyeur d'amenée comprenant une portion principale de brin supérieur disposée sensiblement parallèlement aux axes de rotation des roues intermédiaires, au-dessus desdites roues, ladite portion d'extrémité aval étant disposée entre les deux roues de renvoi, sous les palettes.

Selon un mode de réalisation, le convoyeur d'amenée comprend une bande sans fin unique dont le brin supérieur comporte ladite portion principale et ladite portion d'extrémité aval. La bande sans fin est avantageusement formée de plusieurs courroies disposées bord à bord, seule une partie des courroies constituant la portion principale étant utilisée pour former la partie d'extrémité aval.

Selon un mode de réalisation, le convoyeur d'amenée comprend en outre deux secondes bandes sans fin, montées entre des roues de renvoi à axes de rotation verticaux, fonctionnant en synchronisme avec la première bande, et présentant des brins latéraux disposés en vis-à-vis, à proximité du rouleau principal aval, aptes à pincer les produits.

Selon un mode de réalisation, le convoyeur principal comprend un brin de déchargement rectiligne défini entre les deux organes de renvoi principaux, ledit convoyeur à logements comprenant des moyens de déplacement aptes à déplacer lesdits organes de renvoi principaux selon un mouvement de va-et-vient, parallèlement au brin de déchargement, pour arrêter ledit brin de déchargement lors du déchargement des lots de produits par lesdits moyens de déchargement, tout en continuant le chargement des produits dans les logements.

Selon un mode de réalisation, les moyens de déchargement comprennent un poussoir apte à passer par les côtés intérieurs ouverts des logements pour pousser les produits.

Selon un mode de réalisation, les moyens de butée sont réglables en position transversale.

Selon un mode de réalisation, le troisième convoyeur, dit de sortie, est à bande sans fin, et est destiné à recevoir sur son brin supérieur les lots de produits, directement ou indirectement via des réceptacles.

Selon un mode de réalisation, le dispositif comprend un capteur apte à détecter un produit en sortie du convoyeur d'amenée, les moyens d'entraînement des liens du convoyeur à logements étant asservis audit capteur.

L'invention sera mieux comprise, et d'autres buts, détails, caractéristiques et avantages apparaîtront plus clairement au cours de la description explicative détaillée qui va suivre d'un mode de réalisation particulier actuellement préféré de l'invention, en référence aux dessins schématiques annexés, sur lesquels :
- la figure 1 est une vue en perspective d'un dispositif de formation de lots selon l'invention ;
- la figure 2 est une vue partielle de côté du dispositif de la figure 1 ;
- la figure 3 est une vue partielle en coupe selon le plan III-III de la figure 2 ;
- la figure 4 est une vue en perspective partielle agrandie du dispositif de la figure 1, sur laquelle des éléments du convoyeur à logements et du convoyeur d'amenée ont été retirés ;
- la figure 5 est une vue agrandie partielle de la figure 3 ;
- la figure 6 est une vue agrandie partielle de la figure 4 ; et,
- les figures 7A à 7G sont différentes vues schématiques de côté du convoyeur à logements, illustrant les différentes étapes pour le chargement en continu de six saucisses et le déchargement d'un lot de six saucisses dans une barquette à l'arrêt.

Les figures illustrent un dispositif 1 de formation de lots pour le chargement de lots de saucisses dans des barquettes B. Le dispositif selon l'invention est par exemple disposé en aval d'une machine de fabrication de saucisses, telle que celle décrite dans le document brevet FR 2 725 876.

Le dispositif comprend un convoyeur 2 d'amenée, un convoyeur 5 à logements, et un convoyeur 8 de sortie pour le convoyage de barquettes.

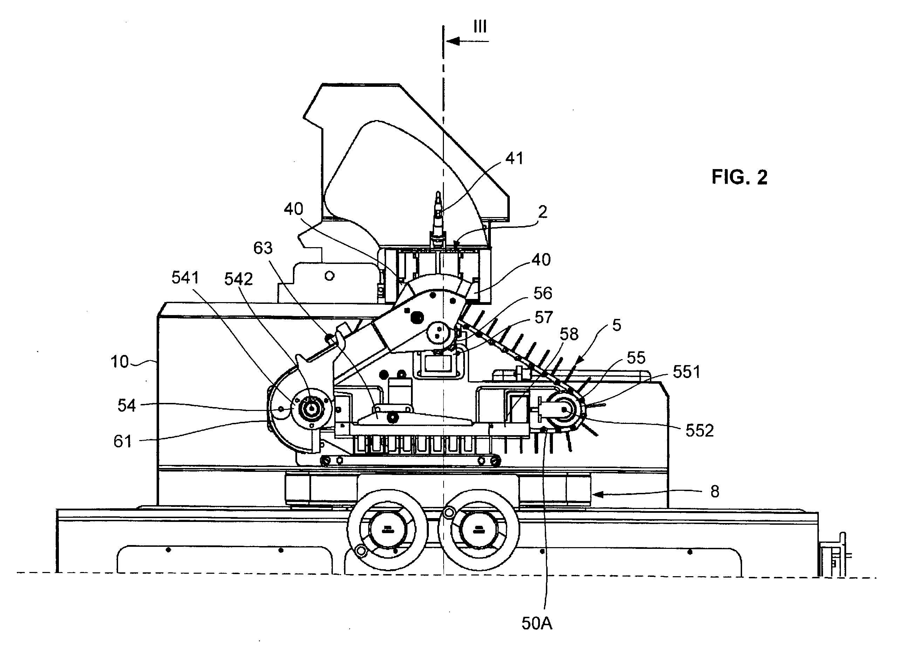

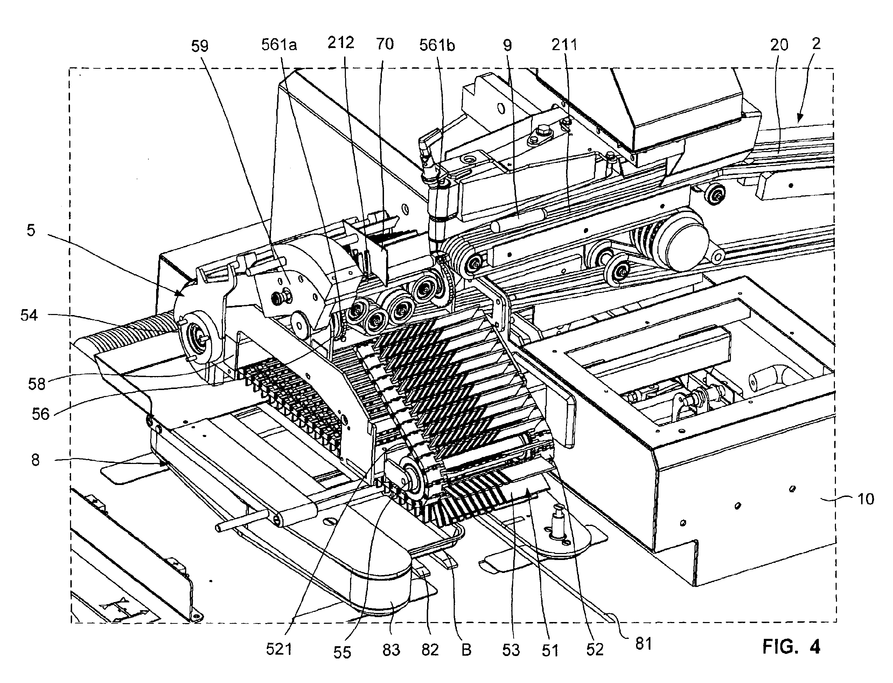

En référence aux figures 2 à 6, et en particulier à la figure 4, le convoyeur 5 à logements comprend une paire de lien 52 sans fin espacés l'un de l'autre, et parallèles entre eux, portant des palettes 53 qui délimitent entre elles des logements 51 individuels. Les liens sont montés sur deux organes 54, 55 de renvoi principaux et un organe 56 de renvoi intermédiaire, de sorte que les liens soient déplacés selon un trajet de circulation en triangle.

Les liens 52 sont constitués de chaînes formées de maillons 521 articulés les uns aux autres, chaque palette 53 est formée d'une plaque rectangulaire qui est montée à un maillon de chaque chaine. Les palettes sont fixées rigidement aux maillons, et s'étendent vers l'extérieur sensiblement à 90° des maillons. Chaque logement 51 est délimité entre deux palettes successives parallèles, et présente un côté extérieur ouvert défini entre les deux bords 531 transversaux extérieurs des palettes, un côté inférieur ouvert défini entre les deux bords 532 transversaux intérieurs, et deux côtés latéraux ouverts, un premier défini entre les deux bords latéraux 533, et un second défini entre les deux bords latéraux 534.

Suivant la figure 2, les organes 54, 55 de renvoi principaux comprennent deux roues 541 amont crantées solidaires d'un premier axe 542 et deux roues 551 aval crantées solidaires d'un deuxième axe 552. L'organe 56 de renvoi intermédiaire comprend deux roues 561a, 561b intermédiaires crantées. Chaque lien 52 engrène sur une roue intermédiaire, une roue amont et une roue aval. Le premier axe 542 des roues amont et le second axe 552 des roues aval sont montés rotatifs sur un premier support 58 qui est monté mobile en translation horizontale sur le bâti 10 du dispositif de formation de lots. Les roues intermédiaires sont montées rotatives sur un second support 57, indépendamment l'une de l'autre, au-dessus des paires de roues amont et aval, ledit second support 57 étant monté fixe sur le bâti 10. Le brin 50A, dit de déchargement, de convoyeur 5, qui est défini entre les deux paires de roues amont et aval, est disposé sensiblement horizontalement.

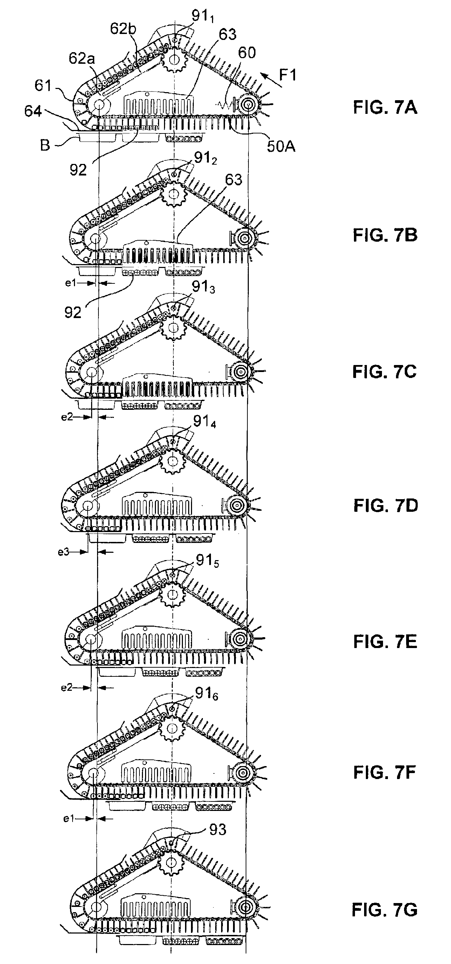

Des moyens de déplacement (non représentés), montés entre le bâti 10 et le premier support 58, sont aptes à déplacer en translation horizontale le premier support 58 par rapport au bâti, selon un mouvement de va-et-vient, entre une position dite de référence illustrée à la figure 7A et une position extrême illustrée à la figure 7D. Des premiers moyens d'entraînement 59, agissant par exemple sur la roue 561a intermédiaire opposée au convoyeur 2 d'amenée, sont aptes à entraîner en rotation les chaînes portant les palettes dans le sens anti-horaire, tel qu'illustrée par la flèche référence F1 sur la figure 7A. Dans la position de référence, les paires de roues amont et aval sont disposées sensiblement symétriquement de part et d'autre des roues intermédiaires, le trajet de circulation étant sensiblement en triangle isocèle. Les premiers moyens d'entraînement et les moyens de déplacement fonctionnent en synchronisme, de sorte que le brin 50A de déchargement soit à l'arrêt lors du déplacement du premier support 58 portant les roues amont et aval vers sa position extrême. Lors de ce déplacement, le triangle du trajet de circulation se déforme. Pour garantir une longueur de trajet de circulation identique lors de la déformation du triangle, le second axe des roues aval est monté sur le premier support 58 au moyen d'un système 60 élastique, illustré de manière schématique à la figure 7A, autorisant un déplacement en translation horizontal dudit axe par rapport à son support 58.

Le convoyeur à logements présente un poste de chargement où a lieu le chargement des saucisses et un poste de déchargement disposé au niveau du brin 50A de déchargement, où a lieu le déchargement des saucisses des logements. Entre deux organes de renvoi, et notamment au niveau du brin de déchargement, les palettes sont disposées parallèlement entre elles. Lors du passage des liens sur les organes de renvoi, les palettes s'écartent, tel que visible sur les figures. Le pas e2 d'écartement entre deux palettes successives est défini de sorte que chaque saucisse placée dans un logement soit pincée entre les deux palettes lorsque celles-ci sont parallèles entre elles, et le poste de chargement du convoyeur à logements est défini au niveau des roues intermédiaires, lorsque les deux palettes d'un logement sont le plus écartées. Pour maintenir les saucisses dans les logements lors du passage des liens sur les roues amont, un capotage 61 incurvé est monté sur le premier support 58 pour fermer le côté extérieur des logements défini entre les bords 531 transversaux extérieurs des palettes. Pour garantir le maintien des saucisses dans les logements le long du brin du convoyeur défini entre les roues intermédiaires et les roues amont, des capotages plan 62a, 62b sont montés sur le premier support et sur le second support pour fermer le côté intérieur des logements définis entre les bords 532 transversaux intérieurs des palettes.

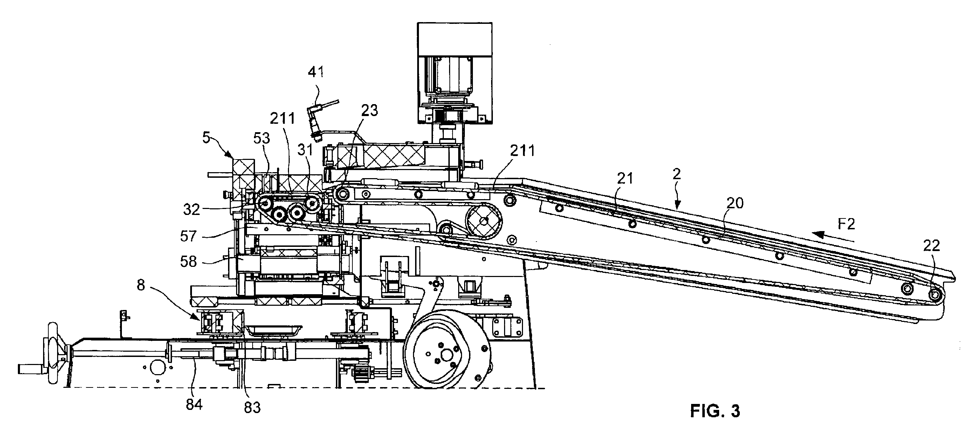

Au poste de déchargement, le convoyeur comprend des moyens 63 de déchargement formés d'un poussoir comprenant une embase portant une pluralité de barres. Le poussoir est monté mobile en translation verticale sur le premier support, entre une position rétractée haute illustrée à la figure 7A, dans laquelle le poussoir est disposé au-dessus du brin de déchargement, entre les deux chaines, et une position active basse, illustrée aux figures 2, 7B et 7C, dans laquelle les barres du poussoir pénètrent dans les logements pour pousser les saucisses hors des logements, vers le bas, dans des barquettes B positionnées sur le convoyeur 8 de sortie. Pour garantir le maintien des saucisses dans les logements le long du brin de déchargement en amont du poste de chargement, un capotage 64 est monté sur le second support 57 pour fermer le côté intérieur des logements. Au niveau du poste de chargement, il peut être prévu un système de trappe 65 (figure 3) déplaçable entre une position fermée, pour fermer lesdits côtés intérieurs lorsque le poussoir est en position rétractée, et une position ouverte pour permettre le déchargement des saucisses par le poussoir en position active.

Le convoyeur 2 d'amenée comprend une première bande 20 sans fin recevant sur son brin supérieur 21 les saucisses 9 sortant d'une machine de fabrication. Ce convoyeur d'amenée transporte dans la direction F2 les saucisses 9 orientées longitudinalement, les unes derrières les autres. Le convoyeur d'amenée disposé perpendiculairement au convoyeur à logements place les saucisses dans les logements 51.

En référence aux figures 3 à 6, la première bande sans fin comporte une portion 211 de brin supérieur, dite principale, permettant d'amener les saucisses dans les logements par un côté latéral ouvert des logements au poste de chargement, et une portion 212 de brin supérieur, dite d'extrémité aval, disposée entre les deux chaînes 52, sous les bords 532 transversaux intérieurs des palettes 53. La portion 211 principale et la portion 212 d'extrémité aval sont centrées selon un même plan vertical passant par les axes de rotation des roues 561a, 561b intermédiaires, les deux portions 211, 212 étant écartées l'une de l'autre d'une distance suffisante pour le positionnement entre elles de la roue 561b intermédiaire.

La portion 211 principale est définie entre un rouleau 22 principal amont et un rouleau 23 principal aval, ces deux rouleaux étant montés rotatifs sur un châssis 24 du convoyeur d'amenée autour d'axe horizontaux. Le châssis du convoyeur d'amenée est monté sur le bâti du dispositif, de sorte que l'axe du rouleau principal aval soit disposé parallèlement aux chaînes 52 du convoyeur à logements, la bande sans fin qui passe sur le rouleau aval étant disposée à proximité de la roue 561b intermédiaire, sans contact avec cette dernière. Au niveau dudit rouleau 23 principal aval, la portion 211 principale s'étend sensiblement horizontalement, et au dessus du niveau de la chaîne passant sur la roue 561b intermédiaire.

La portion 212 d'extrémité est définie entre un rouleau 31 secondaire amont et un rouleau 32 secondaire aval, d'axes de rotation horizontaux, perpendiculaires aux axes des roues 561a, 561b intermédiaires.

Après passage sur le rouleau 23 principal amont, la bande sans fin passe sur un rouleau 25 principal intermédiaire disposé entre les rouleaux 22, 23 principaux amont et aval, puis passe sur un premier rouleau 33 secondaire intermédiaire, avant de passer sur le rouleau secondaire amont, ledit premier rouleau 33 secondaire intermédiaire étant disposé entre et en dessous des rouleaux 31, 32 secondaires amont et aval.

Le rouleau 25 intermédiaire principal et le premier rouleau 33 secondaire intermédiaire sont disposés de sorte que le brin de bande défini entre eux puisse passer sous la roue 561b intermédiaire. En sortie du premier rouleau secondaire intermédiaire, la bande passe sur un second rouleau 34 secondaire intermédiaire pour retourner en direction du rouleau 22 principal amont, en passant sous le rouleau 25 principal intermédiaire.

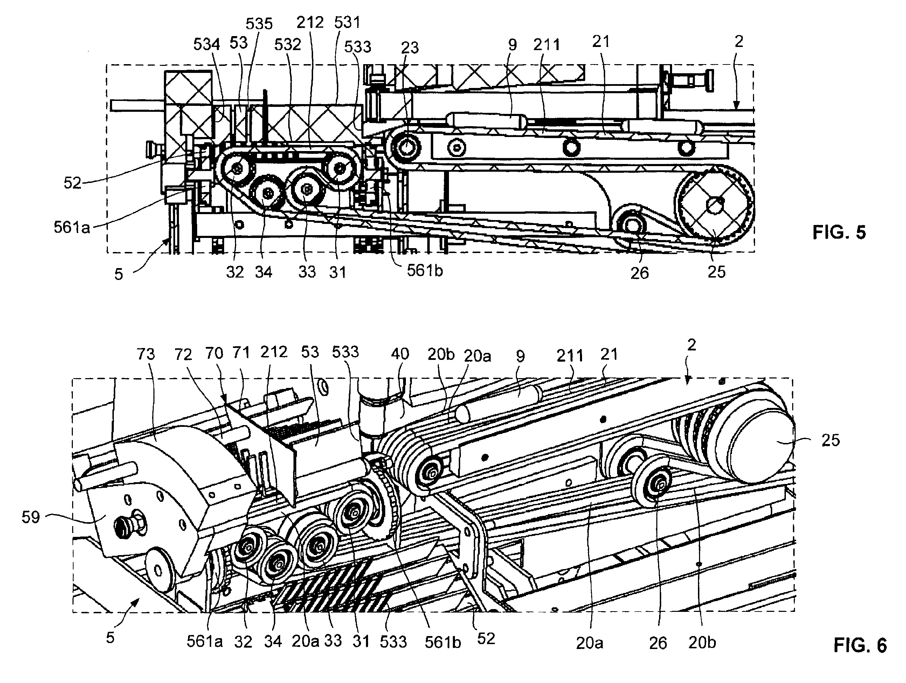

En référence à la figure 6, au niveau de la portion 211 principale, la bande sans fin est formée de quatre courroies disposées bord à bord, dont deux courroies 20b, dites latérales, disposées de part et d'autre de deux courroies 20a centrales. Au niveau de la portion 212 d'extrémité aval, la bande est formée uniquement des deux courroies centrales. En sortie du rouleau 25 principal intermédiaire, seules les deux courroies 20a centrales sont dirigées en direction des rouleaux secondaires, les deux courroies latérales 20b passant sur des roues 26 de renvoi principales pour passer ensuite directement sur le rouleau 22 principal amont. Des deuxièmes moyens d'entraînement, agissant par exemple sur le rouleau 25 principal intermédiaire, assurent l'entraînement en continu de la première bande sans fin 20, selon la direction F2.

En variante, la portion principale 211 et la portion d'extrémité aval sont obtenues en utilisant deux bandes sans fin séparées.

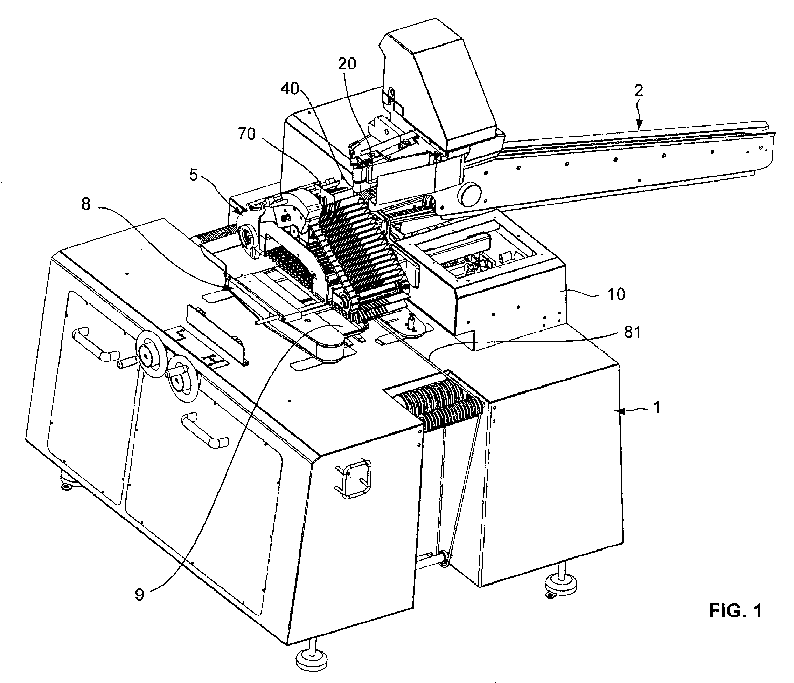

Le convoyeur d'amenée comprend en outre deux secondes bandes 40 sans fin, dont une seule est représentée sur la figure 1, montées entre des roues de renvoi amont et aval, à axes de rotation verticaux, et présentant des brins latéraux disposés en vis-à-vis, de part et d'autre de la portion 211 principale du brin supérieur de la première bande, à proximité du rouleau 23 principal aval. L'écartement des deux bandes peut avantageusement être réglé afin d'être adapter à la section des saucisses, pour les pincer légèrement entre les deux brins en vis-à-vis. Ces secondes bandes sont entraînées par des troisièmes moyens d'entraînement de sorte que lesdits brins en vis-à-vis se déplacent sensiblement à la même vitesse que la portion principale du brin supérieur de la première bande. Ces secondes bandes permettent de centrer les saucisses sur la portion principale, assurent un positionnement longitudinal des saucisses, qui ont une tendance naturelle à se cintrer dans le cas de boyaux naturels, et garantissent une bonne projection des saucisses dans les logements depuis ladite portion principale.

Le poste de chargement du convoyeur à logements comprend des moyens 70 de butée comportant une plaque 71 montée perpendiculairement aux palettes pour fermer le côté latéral de chaque logement qui est opposé au convoyeur d'amenée. La plaque peut être montée fixe sur le second support 57 du convoyeur à logement dans différentes positions, décalées transversalement les unes des autres. Les palettes 53 sont munies de plusieurs fentes 535 correspondant à ces diverses positions transversales de la plaque, la plaque s'insérant dans des fentes des palettes passant au niveau du poste de chargement lors de l'entraînement des chaînes. Seules quelques fentes sont représentées sur la figure 5 dans un souci de clarté.

La plaque 71 est montée fixe sur le second support, au-dessus de la portion 212 d'extrémité aval via une tige 72 transversale montée coulissante sur un support 73 assemblé de manière amovible sur le second support ou sur le bâti, au-dessus de la roue 561a intermédiaire.

En référence en particulier à la figure 4, le dispositif de formation de lots comprend en outre un convoyeur 8 de sortie pour le transport de barquettes B disposées les unes derrière les autres, comprenant une première bande 81 sans fin comprenant un brin supérieur s'étendant sous le brin 50A de déchargement parallèlement à ce dernier. Cette bande sans fin est formée d'une pluralité de câbles, dont un seul est représenté sur les figures, guidés sur des rouleaux montés rotatifs sur le bâti 10 autour d'axes parallèles aux rouleaux du convoyeur à logements. Cette bande sans fin est entraînée en continue via des quatrièmes moyens d'entraînement. Au niveau du poste de déchargement, le convoyeur de sortie comprend deux rails 82 longitudinaux décalés transversalement l'un de l'autre, passant entre les câbles et dont les bords supérieurs sont disposés au dessus desdits câbles. Le convoyeur de sortie comprend en outre deux secondes bandes 83 sans fin, dont une seule est représentée sur les figures, montées entre des roues de renvoi amont et aval à axes de rotation verticaux, et présentant des brins latéraux disposés en vis-à-vis au dessus du brin supérieur de la première bande 81, de part et d'autre des rails longitudinaux. Le convoyeur de sortie comprend avantageusement un système 84 de réglage pour régler la position transversale de chaque brin latéral ainsi que l'écartement entre les deux brins latéraux, en fonction du réglage de la position transversale de la plaque 71 précitée, ceci afin d'adapter le dispositif à différents types de barquette et à différentes longueur de saucisses. Ces secondes bandes sont entraînées par des cinquièmes moyens d'entraînement, de sorte que lesdits brins latéraux en vis-à-vis se déplacent sensiblement à la même vitesse que le brin supérieur de la première bande 81. Les secondes bandes sont réglées pour caler transversalement les barquettes et les pincer entre les brins en vis-à-vis afin de les déplacer pas à pas. La première bande sans fin fonctionne en continue pour amener les barquettes jusqu'aux rails puis les évacuer en sortie de rails, les secondes bandes fonctionnent pas en pas, pour déplacer les barquettes, qui reposent sur les rails, les unes après les autres, sous le poste de chargement du convoyeur à logements.

Le dispositif selon l'invention comprend une unité de commande apte à commander les moyens d'entraînement de la première bande 20 et des secondes bandes 40 du convoyeur 2 d'amenée, les moyens d'entrainement du convoyeur 5 à logements, ainsi que les moyens de déplacement de son premier support 58 pour les rouleaux principaux, de son poussoir 63 et de son éventuel système 65 de trappe, et les moyens d'entraînement des secondes bandes 83 du convoyeur de sortie.

Une description du fonctionnement du dispositif de formation de lots selon l'invention va à présent être effectuée.

Le convoyeur 2 d'amenée reçoit, sur la portion 211 principale du brin supérieur de sa première bande, du côté de son rouleau 22 amont principal, les saucisses 9 sortant d'une machine de fabrication. Chaque saucisse portée sur ledit brin principal est pincée entre les deux brins latéraux des secondes bandes 40 et éjectée dans un logement 51 disposé en vis-à-vis de ladite portion principale. La saucisse passe entre les deux bords 533 latéraux des palettes, et vient sur la portion 212 d'extrémité aval du brin supérieur qui est disposée entre les deux palettes du logement. La saucisse est alors déplacée positivement par cette portion d'extrémité jusqu'à sa mise en butée contre la plaque 71. Au fur et à mesure que les chaînes 52 avancent, les palettes définissant le logement se rapprochent l'une de l'autre, et pincent la saucisse, et le logement vide suivant arrive au poste de chargement pour être chargé avec la saucisse suivante transportée par le convoyeur d'amenée.

Les figures 7A à 7G illustrent les différentes étapes d'un cycle de chargement de six saucisses au poste de chargement et de déchargement d'un lot de six saucisses au poste de déchargement.

A la figure 7A, les paires de roues principales sont dans leur position de référence, disposées symétriquement de part et d'autre des roues intermédiaires fixes. Une barquette B vide est disposée à l'arrêt au poste de remplissage, sous le poussoir en position escamotée une première saucisse 91₁ arrive pour être chargée au poste de chargement.

Les chaînes portant les palettes sont déplacées d'une distance e2 correspondant au pas d'écartement entre deux palettes successives parallèles, jusqu'à amener le logement vide suivant au poste de chargement pour le chargement d'une deuxième saucisse 91₂. Lors de ce déplacement des chaînes sur cette distance e2, la première saucisse 91₁ est chargée dans un logement, le premier support portant les paires de rouleaux amont et aval est déplacé en translation horizontale vers la gauche d'une distance e1, correspondant à un demi-pas. Ce déplacement en translation horizontale a pour effet d'arrêter le déplacement du brin de déchargement 50A. Les six saucisses 92 disposées dans les logements positionnés au droit du poussoir 63 sont alors éjectées hors des logements par déplacement du poussoir en position basse et tombent par gravité dans la barquette, tel qu'illustré à la figure 7B.

Lors du déplacement suivant des chaînes d'une distance e2 pour le chargement d'une troisième saucisse 91₃, le premier support est déplacé vers la gauche d'un demi-pas, pour maintenir le brin de déchargement à l'arrêt, avec le poussoir en position active, telle qu'illustrée à la figure 7 C.

Lors du déplacement suivant des chaînes d'une distance e2 pour le chargement d'une quatrième saucisse 91₄, le premier support est déplacé vers la gauche d'un demi-pas, pour maintenir le brin de déchargement à l'arrêt, et permettre le retour du poussoir en position haute, tel qu'illustré à la figure 7D. Le premier support est alors décalé vers la gauche d'une distance e3 correspondant à 3/2 pas. Simultanément, les secondes bandes du convoyeur de sortie sont entraînées pour amener une barquette vide sous le poussoir.

Lors des déplacements suivants sur une distance correspondant à trois pas, la cinquième et la sixième saucisses 91₅, 91₆ sont chargées dans des logements, une autre saucisse 93 arrive au poste de chargement, et le premier support est déplacé en translation vers sa position de référence, tel qu'illustré aux figures 7E à 7G, la position du convoyeur à logements à la figure 7G étant identique à celle de la figure 7A. Ce déplacement en translation combiné au déplacement des chaînes a pour effet de déplacer le brin de chargement de six pas vers la droite et ainsi d'amener six logements chargés de saucisses au niveau du poussoir. Par ailleurs, une barquette vide est amenée sous le poussoir.

Un simple paramétrage du dispositif permet de modifier le nombre de saucisses par lot. A titre d'exemple, en prévoyant un poussoir à douze barres, tel qu'illustré sur les figures, des lots de douze saucisses pourront être formés en maintenant, à partir de la position illustrée aux figures 7A ou 7G, le premier support dans sa position de référence lors du déplacement des chaînes sur 6 pas supplémentaires, puis en effectuant le cycle décrit aux figures 7B à 7F.

En sortie de la machine de fabrication de saucisse, les saucisses sont disposées longitudinalement les unes derrière les autres, avec un écartement longitudinal entre deux saucisses successives qui est sensiblement constant. En fonctionnement normal, les chaînes du convoyeur à logements sont entraînées en continue, sensiblement à vitesse constante. Pour garantir un chargement de l'ensemble des logements du convoyeur défilant au poste de chargement, notamment en cas d'alimentation irrégulière en saucisses du convoyeur d'amenée, le convoyeur d'amenée comprend avantageusement un capteur 41 apte à détecter la présence d'une saucisse sortant de la portion 211 principale. L'entraînement des chaînes du convoyeur à logements est alors asservi au signal de sortie de ce capteur, et peut être ralenti et éventuellement arrêté en fonction des variations d'écartement entre deux saucisses successives sur le convoyeur d'amenée.

Selon des variantes de réalisation, plusieurs saucisses peuvent être chargées dans chaque logement. Dans ce cas, les moyens de butées comprennent avantageusement une ou plusieurs butées supplémentaires, aptes à être insérées au poste de chargement dans le logement, après l'insertion d'une saucisse, contre laquelle la saucisse suivante chargée dans le logement vient en butée. Le dispositif selon l'invention peut bien entendu être utilisé pour le chargement d'autres types de produits dans des réceptacles, par exemple des boulettes de viandes.

Les saucisses tombent directement sur le brin supérieur d'un convoyeur de sortie, formé par exemple d'une simple bande sans fin continue, disposée parallèlement ou perpendiculairement au brin de déchargement du convoyeur à logements.

Selon une variante de réalisation, le trajet de circulation est en triangle, et le chargement se fait comme précédemment, latéralement, au niveau de l'organe intermédiaire, mais ce dernier est disposé en dessous des organes principaux. La portion d'extrémité aval vient alors sensiblement fermer le côté extérieur ouvert du logement défini entre les bords transversaux extérieurs des palettes. Le déchargement est réalisé sur le brin de déchargement par un poussoir soulevant les saucisses, et par une tête de préhension, par exemple de type ventouse, montée sur un robot, apte à saisir les lots de saucisses pour les transférer dans des réceptacles.

Selon une autre variante de réalisation, le convoyeur à logements comprend deux organes de renvoi principaux, le convoyeur d'amenée étant alors disposé perpendiculairement au niveau d'un des deux organes de renvoi. Le convoyeur d'amenée présente une portion principale de brin supérieur portant les saucisses comme précédemment, et une portion d'extrémité aval de brin incliné, venant sensiblement fermer le côté extérieur ouvert du logement, et présentant une surface inclinée contre laquelle la saucisse vient en appui. Les deux organes de renvoi peuvent également être déplacés selon un mouvement de va-et-vient pour effectuer le déchargement à l'arrêt de lots dans des réceptacles, le convoyeur d'amenée se déplaçant alors avec le poste de chargement.

Bien que l'invention ait été décrite en liaison avec un mode de réalisation particulier, il est bien évident qu'elle n'y est nullement limitée et qu'elle comprend tous les équivalents techniques des moyens décrits ainsi que leurs combinaisons si celles-ci entrent dans le cadre de l'invention telle que délimitée par les revendications.

## Revendications

1. Dispositif de formation de lots de produits destinés à être chargés dans des réceptacles comprenant
- un premier convoyeur (5), dit à logements comprenant deux liens sans fin guidés sur des organes de renvoi (54, 55, 56), à axes de rotation horizontaux, selon un trajet de circulation, et portant une pluralité de palettes (53) définissant entre elles des logements (51), chaque logement pouvant être chargé avec au moins un produit (9) à un poste de chargement du trajet de circulation, et être déchargé à un poste de déchargement du trajet de circulation, et des premiers moyens d'entraînement aptes à entraîner lesdits liens le long du trajet de circulation,
- un second convoyeur (2), dit d'amenée, à bande sans fin comprenant une première bande (20) sans fin apte à transporter des produits (9) les uns derrière les autres, et à amener un ou plusieurs produits dans chaque logement du convoyeur à logements au poste de chargement, et des seconds moyens d'entraînement aptes à entraîner ladite première bande sans fin, et
- des moyens de déchargement aptes à décharger simultanément un lot de produits de logements successifs du convoyeur à logements au poste de déchargement,
- ledit convoyeur (2) d'amenée étant disposé sensiblement perpendiculairement au convoyeur (5) à logements et étant apte à amener les produits (9) dans les logements (51) par un côté latéral ouvert desdits logements,
- le convoyeur à logements étant équipé de moyens (70) de butée aptes à être disposés du côté latéral du logement opposé au convoyeur d'amenée lors du chargement d'un ou plusieurs produits dans ledit logement, pour servir de butée au(x)dit(s) produit(s) à charger dans chaque logement,
- le dispositif comprenant un troisième convoyeur (8), dit de sortie, disposé parallèlement ou perpendiculairement au convoyeur à logements et destiné à recevoir les lots de produits, **caractérisé en ce que** le troisième convoyeur (8) est disposé sous le poste de déchargement.

2. Dispositif selon la revendication 1, **caractérisé en ce que** le troisième convoyeur (8) dit de sortie comprend une première bande sans fin (81) et est apte à recevoir les lots de produits sur son but supérieur.

3. Dispositif selon la revendication 1, **caractérisé en ce que** le troisième convoyeur (8) dit de sortie comprend deux rails longitudinaux (82) décalés transversalement et deux secondes bandes (83) sans fin montées entre des roues de renvoi amont et aval à axes de rotation verticaux et présentant des buts latéraux disposés en vis-à-vis au dessus du brin supérieur de la première bande (81), de part et d'autre des rails longitudinaux.

4. Dispositif selon l'une des revendications 1 à 3, **caractérisé en ce que** ledit convoyeur (2) d'amenée comprend une portion (212) d'extrémité aval de brin s'étendant entre les deux liens (52) du convoyeur (5) à logements, de sorte que chaque produit (9) soit entraîné positivement dans un logement, jusqu'à sa mise en butée contre les moyens (70) de butée.

5. Dispositif selon l'une des revendications 1 à 4, **caractérisé en ce que** le poste de remplissage est défini au niveau d'un organe de renvoi (54, 55, 56), les palettes (53) étant fixées rigidement aux liens de sorte que les deux palettes successives d'un logement s'écartent l'une de l'autre lors du passage des liens sur ledit organe de renvoi, afin d'ouvrir le logement et ainsi faciliter l'insertion d'un ou plusieurs produits.

6. Dispositif selon la revendication 5, **caractérisé en ce que** les palettes (53) d'un logement sont aptes à pincer le(s) produit(s) chargés dans le logement après passage des liens sur les organes de renvoi.

7. Dispositif selon la revendication 5 ou 6, **caractérisé en ce que** le convoyeur (5) à logements comprend les liens guidés selon un trajet de circulation en triangle par deux organes (54, 55) de renvoi principaux et un organe (56) de renvoi intermédiaire, le poste de chargement étant défini au niveau dudit organe de renvoi intermédiaire, le convoyeur d'amenée étant apte à amener les produits (9) dans les logements (51) lors de leur passage sur ledit organe de renvoi intermédiaire.

8. Dispositif selon les revendications 5 et 7, **caractérisé en ce que** ledit organe (56) de renvoi intermédiaire est disposé au-dessus des organes (54, 55) de renvoi principaux, ledit organe de renvoi intermédiaire comprenant pour chaque lien, une roue (561a, 561b) intermédiaire, le convoyeur d'amenée comprenant une portion (211) principale de brin supérieur disposée sensiblement parallèlement aux axes de rotation des roues intermédiaires, ladite portion (212) d'extrémité aval étant disposée entre les deux roues de renvoi.

9. Dispositif selon la revendication 8, **caractérisé en ce que** le convoyeur d'amenée comprend une bande (20) sans fin unique dont le brin (21) supérieur comporte ladite portion (211) principale et ladite portion (212) d'extrémité aval.

10. Dispositif selon la revendication 8 ou 9, **caractérisé en ce que** le convoyeur d'amenée comprend en outre deux secondes bandes (40) sans fin, montées entre des roues de renvoi à axes de rotation verticaux, fonctionnant en synchronisme avec la première bande, et présentant des brins latéraux disposés en vis-à-vis, à proximité du rouleau (23) principal aval, aptes à pincer les produits,

11. Dispositif selon l'une des revendications 7 à 10, **caractérisé en ce que** le convoyeur (5) à logements comprend un brin de déchargement rectiligne défini entre les deux organes (54, 55) de renvoi principaux, ledit convoyeur à logements comprenant des moyens de déplacement aptes à déplacer lesdits organes de renvoi principaux selon un mouvement de va-et-vient, parallèlement au brin de déchargement.

12. Dispositif selon l'une des revendications 1 à 11, **caractérisé en ce que** les moyens de déchargement comprennent un poussoir (63) apte à passer par les côtés intérieurs ouverts des logements pour pousser les produits.

13. Dispositif selon l'une des revendications 1 à 12, **caractérisé en ce que** les moyens (70) de butée comportent une plaque (71) montée fixe sur un support du convoyeur à logement et s'insérant au niveau du poste de chargement dans des fentes des palettes.

14. Dispositif selon la revendication 13, **caractérisé en ce que** la plaque (71) est réglable en position transversale dans des fentes des palettes correspondant à ces diverses positions transversales de la plaque.

15. Dispositif selon l'une des revendications 1 à 14, **caractérisé en ce qu'**il comprend un capteur (41) apte à détecter un produit (9) en sortie du convoyeur (2) d'amenée, les moyens d'entraînement des liens du convoyeur à logements étant asservis audit capteur.

## Patentansprüche

1. Vorrichtung zur Bildung von Produktchargen, die dazu bestimmt sind, in Behälter geladen zu werden, die enthält
- eine erste, so genannte Fördereinrichtung (5) mit Aufnahmen, die zwei auf Umlenkorganen (54, 55, 56) mit waagrechten Drehachsen gemäß einer Umlaufbahn geführte Endlosbindeglieder enthält und eine Vielzahl von Paletten (53) trägt, die zwischen sich Aufnahmen (51) definieren, wobei jede Aufnahme an einer Ladestation der Umlaufbahn mit mindestens einem Produkt (9) beladen und an einer Entladestation der Umlaufbahn entladen werden kann, und erste Antriebseinrichtungen, die die Bindeglieder entlang der Umlaufbahn antreiben können,
- eine zweite, so genannte Zufuhr-Fördereinrichtung (2) mit Endlosband, die ein erstes Endlosband (20) enthält, das Produkte (9) hintereinander transportieren und eines oder mehrere Produkte an der Ladestation in jede Aufnahme der Fördereinrichtung bringen kann, und zweite Antriebseinrichtungen, die das erste Endlosband antreiben können, und
- Entladeeinrichtungen, die gleichzeitig eine Produktcharge von aufeinanderfolgenden Aufnahmen der Fördereinrichtung mit Aufnahmen an der Entladestation entladen können,
- wobei die Zufuhr-Fördereinrichtung (2) im Wesentlichen lotrecht zur Fördereinrichtung (5) mit Aufnahmen angeordnet ist und die Produkte (9) über eine offene Seitenfläche der Aufnahmen in die Aufnahmen (51) bringen kann,
- wobei die Fördereinrichtung mit Aufnahmen mit Anschlageinrichtungen (70) ausgestattet ist, die beim Laden eines oder mehrerer Produkte in die Aufnahme auf der Seitenfläche der Aufnahme entgegengesetzt zur Zufuhr-Fördereinrichtung angeordnet sein können, um als Anschlag für das(die) in die Aufnahme zu ladende(n) Produkt(e) zu dienen,
- wobei die Vorrichtung eine dritte, so genannte Ausgangs-Fördereinrichtung (8) enthält, die parallel oder lotrecht zur Fördereinrichtung mit Aufnahmen angeordnet und dazu bestimmt ist, die Produktchargen zu empfangen,
**dadurch gekennzeichnet, dass** die dritte Fördereinrichtung (8) unter der Entladestation angeordnet ist.

2. Vorrichtung nach Anspruch 1, **dadurch gekennzeichnet, dass** die dritte, so genannte Ausgangs-Fördereinrichtung (8) ein erstes Endlosband (81) enthält und die Produktchargen auf ihrem oberen Trum empfangen kann.

3. Vorrichtung nach Anspruch 1, **dadurch gekennzeichnet, dass** die dritte, so genannte Ausgangs-Fördereinrichtung (8) zwei in Querrichtung verschobene Längsschienen (82) und zwei zweite Endlosbänder (83) enthält, die zwischen vorderen und hinteren Umlenkrädern mit senkrechten Drehachsen montiert sind und seitliche Trums aufweisen, die einander gegenüber über dem oberen Trum des ersten Bands (81) zu beiden Seiten der Längsschienen angeordnet sind.

4. Vorrichtung nach einem der Ansprüche 1 bis 3, **dadurch gekennzeichnet, dass** die Zufuhr-Fördereinrichtung (2) einen hinteren Trumendabschnitt (212) enthält, der sich zwischen den zwei Bindegliedern (52) der Fördereinrichtung (5) mit Aufnahmen erstreckt, so dass jedes Produkt (9) bis zu seinem Anschlag gegen die Anschlageinrichtungen (70) in eine Aufnahme zwangsangetrieben wird.

5. Vorrichtung nach einem der Ansprüche 1 bis 4, **dadurch gekennzeichnet, dass** die Füllstation im Bereich eines Umlenkelements (54, 55, 56) definiert ist, wobei die Paletten (53) starr an den Bindegliedern befestigt sind, so dass die zwei aufeinander folgenden Paletten einer Aufnahme sich beim Durchgang der Bindeglieder über dem Umlenkelement voneinander entfernen, um die Aufnahme zu öffnen und so die Einführung eines oder mehrerer Produkte zu erleichtern.

6. Vorrichtung nach Anspruch 5, **dadurch gekennzeichnet, dass** die Paletten (53) einer Aufnahme das(die) in die Aufnahme geladene(n) Produkt(e) nach dem Durchgang der Bindeglieder über die Umlenkelemente einklemmen können.

7. Vorrichtung nach Anspruch 5 oder 6, **dadurch gekennzeichnet, dass** die Fördereinrichtung (5) mit Aufnahmen die Bindeglieder enthält, die gemäß einer dreieckigen Umlaufbahn von zwei Hauptumlenkelementen (54, 55) und einem Zwischenumlenkelement (56) geführt werden, wobei die Ladestation im Bereich des Zwischenumlenkelements definiert ist, wobei die Zufuhr-Fördereinrichtung die Produkte (9) bei ihrem Durchgang über das Zwischenumlenkelement in die Aufnahmen (51) bringen kann.

8. Vorrichtung nach den Ansprüchen 5 und 7, **dadurch gekennzeichnet, dass** das Zwischenumlenkelement (56) oberhalb der Hauptumlenkelemente (54, 55) angeordnet ist, wobei das Zwischenumlenkelement ein Zwischenrad (561a, 561b) für jedes Bindeglied enthält, wobei die Zufuhr-Fördereinrichtung einen Hauptabschnitt (211) des oberen Trums im Wesentlichen parallel zu den Drehachsen der Zwischenräder angeordnet enthält, wobei der hintere Endabschnitt (212) zwischen den zwei Umlenkrädern angeordnet ist.

9. Vorrichtung nach Anspruch 8, **dadurch gekennzeichnet, dass** die Zufuhr-Fördereinrichtung ein einziges Endlosband (20) enthält, dessen oberes Trum (21) den Hauptabschnitt (211) und den hinteren Endabschnitt (212) aufweist.

10. Vorrichtung nach Anspruch 8 oder 9, **dadurch gekennzeichnet, dass** die Zufuhr-Fördereinrichtung außerdem zwei zwischen Umlenkrädern mit senkrechten Drehachsen montierte zweite Endlosbänder (40) enthält, die synchron mit dem ersten Band arbeiten und in der Nähe der hinteren Hauptrolle (23) einander gegenüber angeordnete seitliche Trums aufweisen, die die Produkte einklemmen können.

11. Vorrichtung nach einem der Ansprüche 7 bis 10, **dadurch gekennzeichnet, dass** die Fördereinrichtung (5) mit Aufnahmen ein geradliniges Entladetrum enthält, das zwischen den zwei Hauptumlenkelementen (54, 55) definiert ist, wobei die Fördereinrichtung mit Aufnahmen Verschiebeeinrichtungen enthält, die die Hauptumlenkelemente gemäß einer Hin- und Herbewegung parallel zum Entladetrum verschieben können.

12. Vorrichtung nach einem der Ansprüche 1 bis 11, **dadurch gekennzeichnet, dass** die Entladeeinrichtungen einen Drücker (63) enthalten, der durch die offenen Innenseiten der Aufnahmen gehen kann, um auf die Produkte zu drücken.

13. Vorrichtung nach einem der Ansprüche 1 bis 12, **dadurch gekennzeichnet, dass** die Anschlageinrichtungen (70) eine Platte (71) aufweisen, die ortsfest auf einen Träger der Fördereinrichtung mit Aufnahmen montiert ist und sich im Bereich der Ladestation in Schlitze der Paletten einfügt.

14. Vorrichtung nach Anspruch 13, **dadurch gekennzeichnet, dass** die Platte (71) in Schlitzen der Paletten in Querstellung einstellbar ist, die diesen verschiedenen Querpositionen der Platte entsprechen.

15. Vorrichtung nach einem der Ansprüche 1 bis 14, **dadurch gekennzeichnet, dass** sie einen Sensor (41) enthält, der ein Produkt (9) am Ausgang der Zufuhr-Fördereinrichtung (2) erfassen kann, wobei die Antriebseinrichtungen der Bindeglieder der Fördereinrichtung mit Aufnahmen vom Sensor abhängig sind.

## Claims

1. Device for forming batches of products intended to be loaded in receptacles, comprising
- a first conveyor (5) of the housing type comprising two endless belts guided on return members (54, 55, 56) with horizontal rotation axes, on a circulation path, and carrying a plurality of blades (53) defining housings (51) between them, each housing being able to be loaded with at least one product (9) at a loading station in the circulation path and be unloaded at a unloading station in the circulation path, and drive means able to drive said belts along the circulation path,
- a second so-called feed conveyor (2), with an endless belt, comprising a first endless belt (20) able to transport products (9) separated from one another and one behind the other, and to bring one or more products in each housing on the housing conveyor at the loading station, and second drive means able to drive said first endless belt, and
- unloading means able to simultaneously unload a batch of products from successive housings on the housing conveyor at the unloading station, in order to load them in a receptacle,
- said feed conveyor (2) being arranged substantially perpendicular to the housing conveyor (5) and being able to bring the products (9) in the housings (51) through an open lateral side of said housings,
- the housing conveyor being equipped with stop means (70) able to be arranged on the lateral side of the housing opposite to the feed conveyor when one or more products are loaded in said housing, to serve as a stop for said product or products to be loaded in each housing,
the device comprising a third so-called discharge conveyor (8), arranged parallel or perpendicular to the housing conveyor, intended to receive the batches of products,
**characterised in that** the third conveyor (8) is arranged under the discharge station.

2. Device according to claim 1, **characterised in that** the third conveyor (8) comprises an endless belt (81) and is able to receive the batches of products on its top length.

3. Device according to claim 1, **characterised in that** the discharge conveyor (8) comprises two longitudinal rails (82) offset transversely from each other, and two second endless belts (83), mounted between upstream and downstream return wheels with vertical rotation axes, and having lateral lengths placed opposite each other above the top length of the first belt, on either side of the longitudinal rails.

4. Device according to claims 1 to 3, **characterised in that** said feed conveyor (2) comprises a downstream end portion (212) of a length extending between the two belts (52) of the housing conveyor (5), so that each product (9) is driven positively in a housing, until it comes into abutment against the stop means (70).

5. Device according to claim 1 to 4, **characterised in that** the filling station is defined at a return member (54, 55, 56), the blades (53) being fixed rigidly to the belts so that the two successive blades of a housing separate from each other when the belts pass over said return member, in order to open the housing and thus facilitate the insertion of one of more products.

6. Device according to claim 5, **characterised in that** the blades (53) of a housing are able to grip the product or products loaded in the housing after the belts pass over the return members.

7. Device according to claim 5 or 6, **characterised in that** the housing conveyor (5) comprises the belts guided on a circulation path in a triangle between two main return members (54, 55) and an intermediate return member (56), the loading station being defined at said intermediate return member, the feed conveyor being able to bring the products (9) into the housings (51) when they pass over the intermediate return member.

8. Device according to claims 5 and 7, **characterised in that** said intermediate return member (56) is arranged above the main return members (54, 55), said intermediate return member comprising, for each belt, an intermediate wheel (561a, 561b), the feed conveyor comprising a main top length portion (211) arranged substantially parallel to the rotation axes of the intermediate wheels, said downstream end portion (212) being arranged between the two return wheels.

9. Device according to claim 8, **characterised in that** the feed conveyor comprises a single endless belt (20) the top length (21) of which comprises said main portion (211) and said downstream end portion (212).

10. Device according to claim 8 or 9, **characterised in that** the feed conveyor also comprises two second endless belts (40), mounted between return wheels with vertical rotation axes, functioning in synchronism with the first belt, and having lateral lengths facing each other, close to the downstream main roller (23), able to grip the products.

11. Device according to one of claims 7 to 10, **characterised in that** the housing conveyor (5) comprises a rectilinear unloading length defined between the two main return members (54, 55), said housing conveyor comprising movement means able to move said main return members in a to-and-fro movement, parallel to the unloading length.

12. Device according to one of claims 1 to 11, **characterised in that** the unloading means comprise a pusher (63) able to pass through the open interior sides of the housings in order to push the products.

13. Device according to one of claims 1 to 12, **characterised in that** the stop means (70) comprise a plate (71) mounted fixedly on a support of the housing conveyor and inserting in slots of some blades passing at the loading station

14. Device according to claim 13, **characterised in that** the plate (71) is adjustable in transverse position in slots of some blades.

15. Device according to one of claims 1 to 14, **characterised in that** it comprises a sensor (41) able to detect a product (9) unloaded from the feed conveyor (2), the means of driving the belts of the housing conveyor being slaved to said sensor.
